# EUROPEAN PATENT APPLICATION

(11) **EP 3 002 611 A1**
(43) Date of publication of application: **06.04.2016**
(21) Application number: 15188044.0
(22) Date of filing: 02.10.2015
(51) Int. Cl.: G01T 1/169

(54) **MEASUREMENT DEVICES AND METHOD FOR MEASURING RADIATION OF A RADIATION SOURCE**

(30) Priority: 02.10.2014 DE 102014220084
(71) Applicant: Koltermann, Peer, 13595 Berlin (DE)
(72) Inventor: Koltermann, Peer, 13595 Berlin (DE)
(74) Representative: Maikowski & Ninnemann

(57) **Abstract**

The invention relates to a measurement device and a method for measuring radiation of a radiation source, the measurement device comprising a container (2) for receiving a liquid; at least one detector (110) arranged in the container (2); and a detector arrangement (200) outside the container (2) for determining the size of a radiation field and/or the energy of radiation emitted by the radiation source (150).

The invention also relates to a measurement device comprising a container (2) filled with a liquid and a cover (600) at least partially in contact with a surface of the liquid.

## Description

The invention relates to a measurement devices for measuring radiation of a radiation source according to claims 1 and 13 and a method for measuring radiation of a radiation source according to claim 12.

In the medical field, the use of radiation for treating malignant tissue is well known. For example, particle radiation or X rays are directed towards the tissue to be treated using, for example, a linear accelerator as radiation source. Such a radiation treatment has to be carried out very accurately both in terms of the impact location of the radiation and the intensity of the radiation at the impact location. Computer system are used for planning these treatments (so-called TPSs - treatment planning systems), wherein a TPS needs accurate data in particular with respect to the intensity of the radiation at the impact location, i.e. at the intended location of the interaction between the radiation and the tissue to be treated.

Therefore, a measurement of the radiation (in particular, of the intensity of the radiation) generated by the radiation source has to be carried out before the radiation treatment. Usually, the radiation measurement is carried using a target having a density similar to those of the human body. For example, a tank filled with water (a so-called "water phantom") is used as target, wherein a detector for detecting the radiation is arranged in the water tank. The detector is moved within the water tank in all three spatial directions x, y, z to a plurality of locations in order to measure the energy (the intensity) of the radiation at various locations in the water tank. In order to be able to detect the whole potential radiation field of the radiation source, a large water tank has to be employed.

It is an object of the invention to facilitate the measurement of the radiation carried out before the treatment or as a routine system check.

According to the invention, a measurement device for measuring radiation of a radiation source is provided, comprising
- a container for receiving a liquid;
- at least one detector arranged in the container; and
- a detector arrangement (different from the detector arranged in the container and, for example, located outside the container) for determining the size of a radiation field and/or the energy of radiation emitted by the radiation source.

The detector arranged in the interior of the container (which realizes a water phantom mentioned above) is used for e.g. measuring the location and dose of the radiation generated by the radiation source. For example, the detector can be moved relatively to the container independently along all three spatial axes. That is, a large container might be used, wherein the detector is moveable within the container not only in the height direction (z-direction), but also in the horizontal plane, i.e. in the x- and y-direction.

However, instead of using a large container (and moving the detector to the measurement locations within the container), a smaller container might be used, wherein the whole container is moved together with the detector in the x-y-plane and the detector will be moved in the height direction, only. According to this variant of the invention, a mechanism (e.g. a translation stage) for moving the container to various measurement locations along at least one positioning direction is provided. Examples of the principle design of such a mechanism and of the container are described in the European patent application 13 179 111.3 published under EP 2 833 164, which in that respect is incorporated by reference herewith. In particular, the measurement device is used for a so-called acceptance test, commissioning and/or an annual quality assurance measurement.

The detector arrangement outside the container in particular is used to determine the maximum size of the radiation field and/or to determine the depth (in water) generated by the radiation source. That information, in turn, is used for example in order to determine the necessary displacement area (e.g. in the x-y-plane) of the detector inside the container (if a large container is used) or of the container itself (if a moveable smaller container is used).

According to an embodiment of the invention, the detector arrangement comprises a plurality of detectors for detecting radiation of the radiation source, wherein at least some of the detectors are arranged in a row. The detectors might be arranged with a (e.g. constant) distance from one another. For example, the detectors are arranged on a common support (e.g. a plate or another mounting component). The support might be arranged on a side of the above-mentioned mechanism for moving the container that will face away from the radiation source, i.e. the support and the detectors are arranged below the mechanism for moving.

The measurement device according to the invention moreover might comprise a first plurality of detectors arranged in a first row and a second plurality of detectors arranged in a second row, the first row extending at an angle (e.g. perpendicular) relative to the second row. It is also conceivable that a detector array is provided. For example, the mechanism for moving the container is configured to move the container along a first and a second positioning direction, wherein the first row of a plurality of detectors is arranged parallel to the first positioning direction and a second row of a plurality of detectors is arranged parallel to the second positioning direction.

The detectors arranged along the first and/or second positioning direction may be mounted on a common support (e.g. in the form of a rail) that extends parallel to the respective positioning direction. Further, at least some of the detectors may be mounted in such a way that they are pivotable around a common axis. This permits the detector rows to be folded together into a transportation position.

According to another embodiment of the invention, the detector arrangement comprises a measurement chamber (e.g. an ionisation chamber) that will be arranged between the radiation source and the mechanism. The measurement chamber might be arranged directly below the radiation source, wherein the radiation emitted by the radiation source is transmitted through the measurement chamber. For example, the measurement chamber is configured for measuring the radiation dose and/or the area of radiation. More particularly, the dose-area product can be determined using the measurement data obtained from the measurement chamber. Even if the measurement chamber is not arranged on the level of the detector inside the container, it is possible to determine the size of the radiation field on the level of the detector by means of the measurement chamber data.

According to a further aspect, the invention relates to a method for measuring radiation of a radiation source, in particular using a measurement device as described above, the method comprising the steps of:
- determining the size of a radiation field and/or the energy of radiation emitted by the radiation source using a detector arrangement;
- carrying out a measurement of radiation doses using a detector arranged in a liquid filled container.

The detector arrangement might be configured as discussed above with respect to the measurement device. For example, the detector arrangement comprises a plurality of detectors for detecting radiation of the radiation source, wherein at least some of the detectors are arranged in a row. It is also possible that the detector arrangement comprises measurement chamber (e.g. arranged between the radiation source and a mechanism for moving the detector located within the container). In particular, the size of a radiation field and/or the energy of radiation emitted by the radiation is determined before measuring the radiation doses by means of the detector arranged in the liquid filled container (i.e. the field size is determined before the actual calibration measurements).

According to yet another aspect of the invention a measurement device for measuring radiation of a radiation source is provided, in particular as described above, comprising
- a container filled with a liquid;
- a detector for detecting radiation of the radiation source, the detector being arranged in the container; and
- a cover in contact with a surface of the liquid.

The cover may at least partially close an upper opening of the container, wherein, however, the cover may be arranged below an upper edge of the container in order to contact the upper liquid surface.

Further, the measurement device may comprise a device for restricting a movement of the cover away from the surface of the liquid. For example, a holder is attached to the container (e.g. at the upper edge of the container) for holding the cover in position. For example, the holder is in touch or connected to the cover.

Moreover, the cover may comprise at least one recess for permitting measurements (e.g. by means of the detector) in the proximity of the surface of the liquid.

Furthermore, the cover may comprise a plurality of openings (e.g. a perforation) for releasing air between the liquid surface and the cover.

The invention might also relate to a measurement device for measuring radiation of a radiation source, in particular as describe above, comprising
- a container for receiving a liquid;
- a mechanism for moving the container to various measurement locations along a first and a second positioning direction,
- wherein the mechanism comprises a first and a second translation stage; and
- wherein the first and/or the second translation state is rotatable from a measurement position into a transport position, wherein in the measurement position the first and the second translation stage extend at an angle relative to one another while in the transport position the first and the second translation stage extend essentially parallel to one another.

Thus, the measurement device might be foldable for transportation.

Further, the position of the container might also be changed for transportation. Thus, the invention might also relate to a measurement device for measuring radiation of a radiation source, in particular as claimed in one of the preceding claims, comprising
- a container filled with a liquid;
- a detector for detecting radiation of the radiation source, the detector being arranged in the container; and
- a device for rotating the container from a measurement position into a transport position and vice versa.

Embodiments of the invention are described hereinafter with reference to the drawings, which show:
- Fig. 1: a perspective view of a measurement device;
- Fig. 2: schematically a measurement device according to an embodiment of the invention;
- Fig. 3: schematically a measurement device according to another embodiment of the invention;
- Fig. 4: the measurement chamber of the measurement device shown in Figure 3;
- Fig. 5: a top view of a measurement device according to another embodiment;
- Fig. 6: a modification of the measurement device shown in Figure 5;
- Fig. 7: another modification of the measurement device shown in Figure 5;
- Fig. 8: the measurement device shown in Figure 7 in a transport position;
- Fig. 9: a measurement device according to another embodiment of the invention;
- Fig. 10: a modification of the measurement device shown in Figure 9;
- Fig. 11: a perspective view of a measurement device according to an embodiment of the invention;
- Fig. 12: a side view of the measurement device shown in Figure 11;
- Fig. 13: a top view of the measurement device shown in Figure 11;
- Fig. 14: a top view of a modification of the cover of the measurement device shown in Figures 11 to 13; and
- Fig. 15: a perspective view of the measurement device shown in Figure 14.

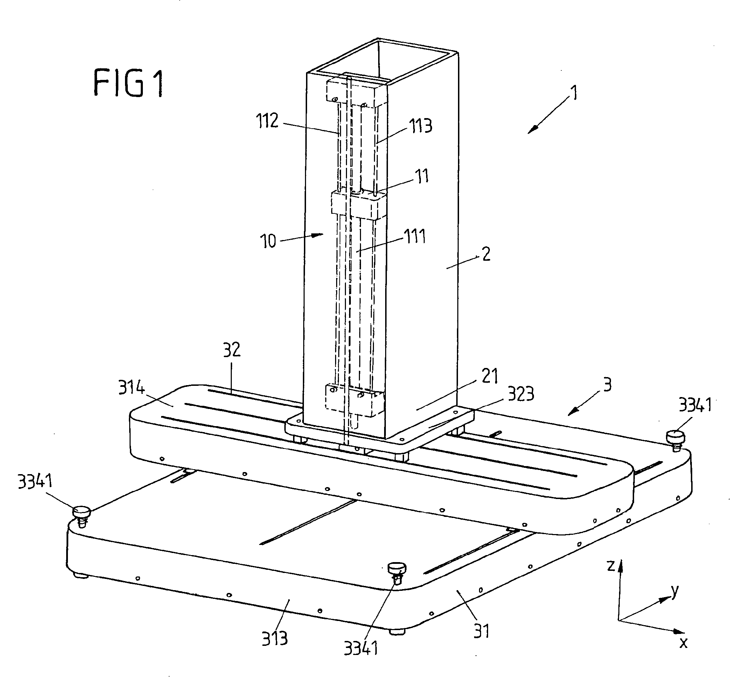

Figure 1 depicts the principle design of a measurement device 1 for measuring radiation of a radiation source (not shown) that can be used for realizing the invention. The design is also described in the European patent application 13 179 111.3 already mentioned above. The measurement device 1 comprises a container in the form of a tank 2 for receiving a liquid, in particular in the form of water (or any other liquid having a comparable density). The tank 2 may have a volume of not more than 20l or not more than 15l.

Further, the measurement device 1 comprises a holder 11 for holding a detector (not shown for detecting radiation of a radiation source (not shown), e.g. an ionization detector or a solid state detector, within the inner volume of tank 2. The measurement device 1 also includes a mechanism 10 for positioning the detector in tank 2 along the z direction, i.e. parallel to an axis of radiation emitted by the radiation source.

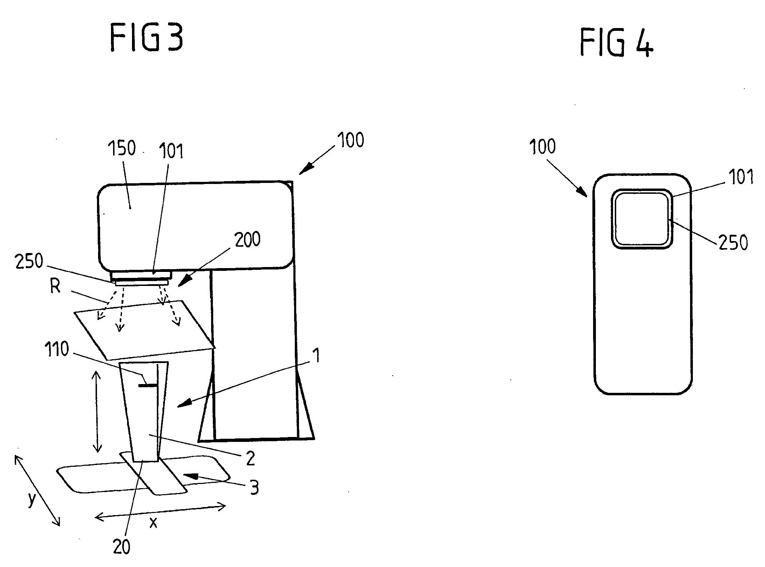

The mechanism 10 for positioning the detector comprises a translation element in the form of a translation shaft 111 interacting with the holder 11 and two guide elements in the form of guide rails 112, 113. By actuating the translation shaft 111 using an electric motor 114 (see e.g. Figure 3) the detector holder 11 and thus the detector can be moved within the tank 2 along the z direction (the vertical direction), i.e. parallel to the axis of radiation emitted by the radiation source. Thus, measurements can be carried out at different locations on the z axis, i.e. at different distances from the radiation source.

Moreover, the measurement device 1 comprises a mechanism 3 for moving the tank 2 independently in a first and a second positioning direction x, y, i.e. for moving the tank 2 in a plane perpendicular to the z direction (perpendicular to the main extension direction of tank 2 or parallel to a bottom 21 of tank 2).

The mechanism 3 comprises a first translation stage 31 for moving tank 2 in the x direction and a second translation stage 32 for moving tank 2 in the y-direction. Each translation stage 31, 32 comprises a translation shaft 311, 321 driven by an actuator 312, 322 such as a stepper motor or a DC-motor. It is noted that the translation stages 31, 32 are, of course, only exemplarily. In principle, any kind of mechanism could be used permitting the tank being moved in a plane perpendicular to the z axis. The translation stages 31, 32 are arranged within cover elements 313, 314.

The tank 2 is arranged on a carrier 323 mounted to the second translation stage 32, wherein the carrier 323 interacts with the translation shaft 321 and is slidably mounted on lateral guide rails 324, 325 via slides 326, 327. The carrier 323 is (e.g. detachably) connected to the slides 326, 327 via adjustment screws 328 permitting the orientation of the carrier 323 and thus of tank 2 to be adjusted. The tank 2, in turn, can be detachably attached to the carrier 323 by attachment means such as screws. However, it is also possible that the tank 2 and the carrier 323 are integrally formed (e.g. from a plastic material). For example, for transportation of the measurement device 1 the unit consisting of the tank 2 and the carrier 323 is detached from the slides 326, 327 (i.e. carrier 323 may remain attached to tank 2).

The second translation stage 32 is mounted to the first translation stage 31 via a guide element 329 interacting with the translation shaft 311 of the first translation stage 31 and two slides 332, 333 slidably arranged on lateral guide rails 330, 331. Using the two translation stages 31, 32 the tank 2 can be moved to any desired measurement position in the x-y plane within the range of the translation stages 31, 32.

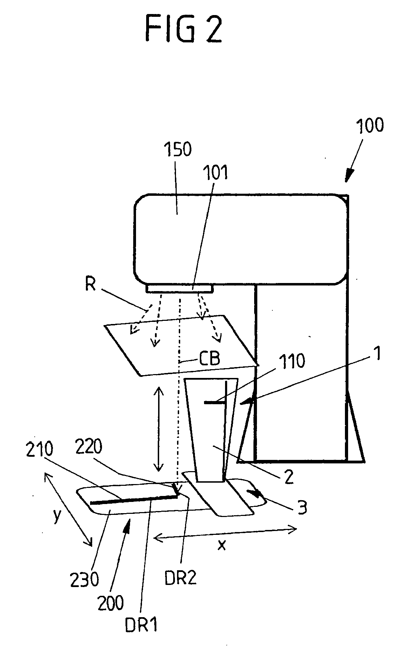

Figure 2 depicts a radiation (therapy) device (e.g. LINAC) 100 including a radiation source 150 for emitting radiation (arrows R) through an output window 101 towards the patient table (not shown) with a water phantom system (measurement device 1) located underneath. For configuring a TPS - treatment planning system, a measurement to collect measurement beam data is carried out using a measurement device 1 that might use the principle configuration shown in Figure 1; i.e. a moveable tank 2 (having e.g. a conical shape) might be provided that will be moved to a plurality of locations in the x-y plane during a measurement. In particular, tank 2 can be moved to cover an area around a center beam CB. A detector 110 is arranged inside the tank 2 in such a way that it can be displaced in the vertical direction (the z-direction).

The measurement device 1 according to the invention shown in Figure 2 moreover comprises a detector arrangement 200 located outside the tank 2. The detector arrangement 200 comprises a plurality of first detectors 210 and a plurality of second detectors 220, wherein the first detectors 210 extend in a first row DR1 orientated along the x-axis, while the second detectors 220 extend in a second row DR2 orientated along the y-axis. The detectors 210, 220 are e.g. used for determining the size of the radiation filed generated by the radiation source 150, wherein the measurement might be carried out before starting the actual configuration measurement (by means of the tank detector 110). For example, the detectors 210, 220 of each of the detector rows DR1, DR2 are arranged in a distance from one another, e.g. the distance between adjacent detectors of one of the rows is at least 1 mm, e.g. approximately 5 mm. Further, each one of the detectors 210, 220 may have a size of some square millimetres.

The detectors 210, 220 further may be connected to an electrometer (not shown) which, in turn, is connected to a hardware device using a software for data acquisition and data evaluation. The detectors 210, 220 (i.e. the detector rows DR1, DR2) enable the measurement device 1 to detect all radiation fields and for example energies of all radiation fields the therapy device is configured to generate. Using results of a measurement obtained by the detectors 210, 220, the field size and energy can be determined. This, in turn, allows to determine measurement positions and to move tank 2 accordingly during the measurement. Consequently the measurement time can be reduced.

At least one of the detector rows DR1, DR2 may be rotatable. For example, the detector row DR2 that comprises the detectors 220 (i.e. the y-axis detector row), which in its measurement position extends in the y-direction, may be pivoted into a transport position (in which it extends parallel to the x-direction). For example, the endings of the y-axis detector row DR2 may be pivotable relatively to a middle portion of the y-axis detector row.

The detectors 210, 220 are arranged on a common support in the form of a holder 230. For example, the detectors 210, 220 are arranged below the mechanism 3 for moving the tank 2. However, it is also possible that the detectors 210, 220 are arranged above the mechanism 3. Further, the first detectors 210 might be mounted on a first holder and the second detectors 220 might be mounted on a second holder separate from the first holder.

Figure 3 shows a radiation (therapy) device 100 that also comprises a measurement device 1 having a moveable tank 2. However, different from Figure 2, the detector arrangement 200 comprises a measurement chamber 250 in the form of an ionisation chamber 250 arranged directly below the radiation source 150. For example, the ionisation chamber 250 is connected to the radiation source 150; e.g. the ionisation chamber 250 is fixed to a housing of the radiation source 150 or of the radiation device 100. The ionisation chamber 250 might be a conventional ionisation chamber.

By means of the ionisation chamber 250 the radiation field and/or the radiation energy in the proximity of the radiation source might be measured. Using that measurement data, the size of the radiation field on the level of the tank 2 (e.g. on the level of its bottom 20) may be determined. Subsequently, radiation doses in the liquid contained in tank 2 are measured using detector 110 and moving tank 2 to different locations of the radiation field. It is noted that instead of a moveable tank a larger tank could be used, wherein the detector 110 inside the tank is moved in the x-y-plane.

Figure 4 shows a detail of the radiation device 100 shown in Figure 3. More particularly, the ionisation chamber 250 is shown in a bottom-to-top view. As can be seen, the size of the ionisation chamber 250 allows to cover (at least approximately) the whole beam radiated by radiation source 150.

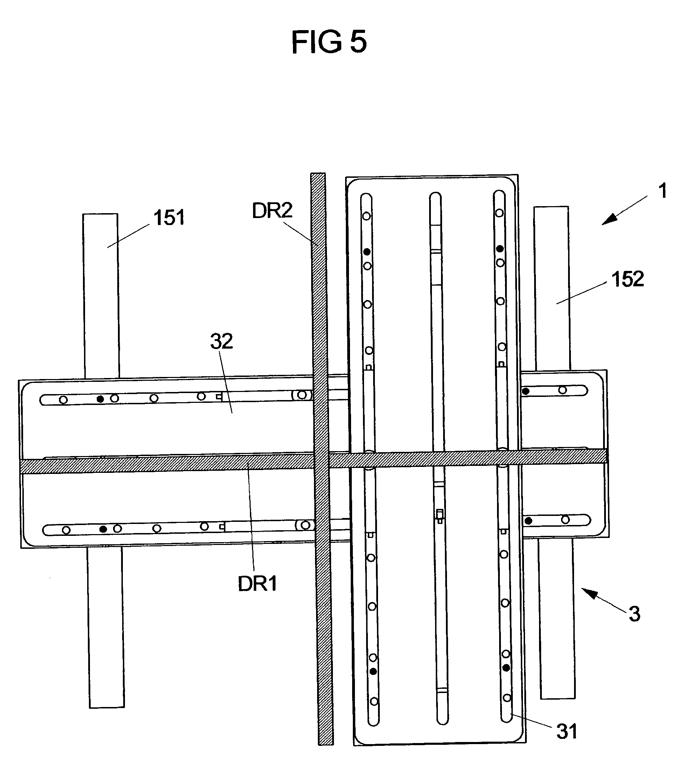

Figure 5 shows a top view of a mechanism 3 for moving tank 2 that could be used in the embodiments of the measurement device 1 according to the invention discussed above. Measurement device 1 similarly to Figure 2 comprises a first and a second detector row DR1, DR2 arranged parallel to translation stages 32, 31 (i.e. parallel to the x- and y-direction, respectively) of the mechanism 3 for moving the tank 2 (not shown in Figure 5). The detector rows DR1, DR2 cross one another, wherein the overlap region might be located in the region of the central beam of the radiation source. Further, the detector rows DR1, DR2 (e.g. their overlap region) might be arranged and configured for measuring small radiation fields (e.g. smaller than 5 x 5 cm, e.g. about 1 x 1 cm), too.

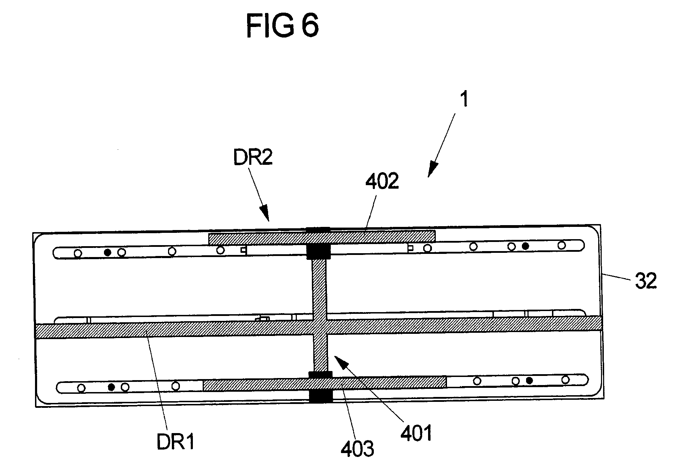

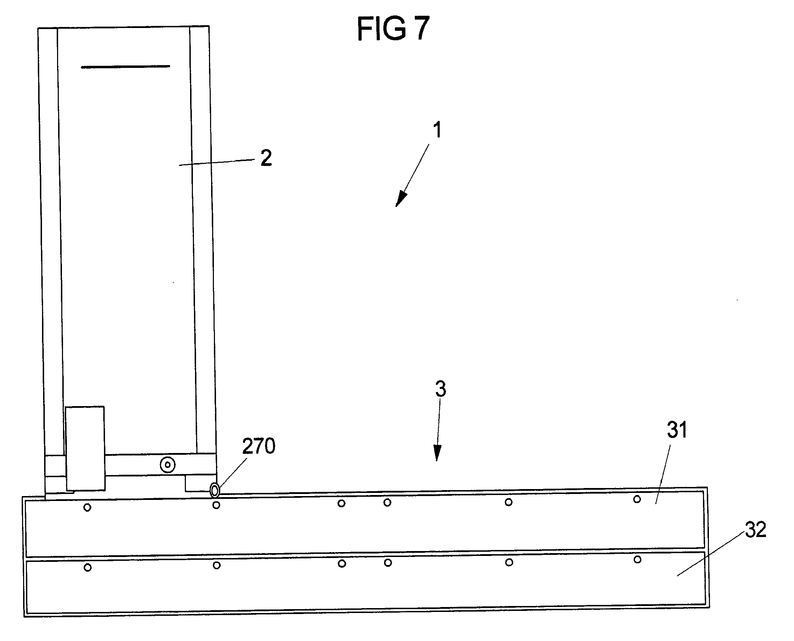

The translation stages 31, 32 can be rotated with respect to one another such that they can be moved from a transport position, in which they extend parallel to one another (see Fig. 7), into a measurement position shown in Figure 5. This can be achieved by any mechanics as long as both translation stages 31, 32 are orientated parallel for transportation. In the measurement position the translation stages 31, 32 may "latch" to one another, i.e. they assume fixed positions. The detector rows DR1, DR2 (i.e. a holder that carries the detector rows DR1, DR2) similarly may also be rotatable from a transport position into a measurement position (as also shown in Figure 6).

The measurement device 1 further comprises rotatable supports 151, 152 arranged below the lower translation stage 32 for supporting the measurement device 1 in the measurement position. The supports 151, 152 in the transportation position extend parallel to the translation stages 31, 32, while they extend perpendicular to the translation stages 31, 32 in the measurement position. The supports 151, 152 ("feet") are disposed in the region of opposite ends of the translation stage 32 (and might be connected to the translation stage 32). While the supports 151, 152 are rotated to extend essentially perpendicular to the x-axis for measurements, the supports 151, 152 may be pivoted into a transport position in which they extend parallel to the x-axis.

The rotation of the translation stages 31, 32 (in the x and the y-direction), the rotation of the detector rows DR1, DR2 and the rotation of the supports 151, 152 may be carried out around parallel rotational axes, wherein fixed end positions may be provided for the rotation of the translation stages 31, 32. Different from the rotation of the translation stages 31, 32, the rotation of the detector rows DR1, DR2 and/or the rotation of the supports 151, 152 can be carried out relative to a holding part (e.g. around a holding part). Further, the detector rows DR1, DR2 and/or the supports 151, 152 may be displaced along their rotational axes.

Figure 6 shows a modification of the detector rows DR1, DR2. The second detector row DR2 has a fixed middle part 401 (fixed to x-translation stage 32) and two end parts 402, 403 rotatably connected to the middle part 401. In the transport position shown in Figure 6, the end parts 402, 403 are rotated to extend parallel to the x-translation stage 32. The other translation stage 31 is not shown in Figure 6. The other detector row DR1 in that example is (non-rotatably) fixed to the translation stage 32.

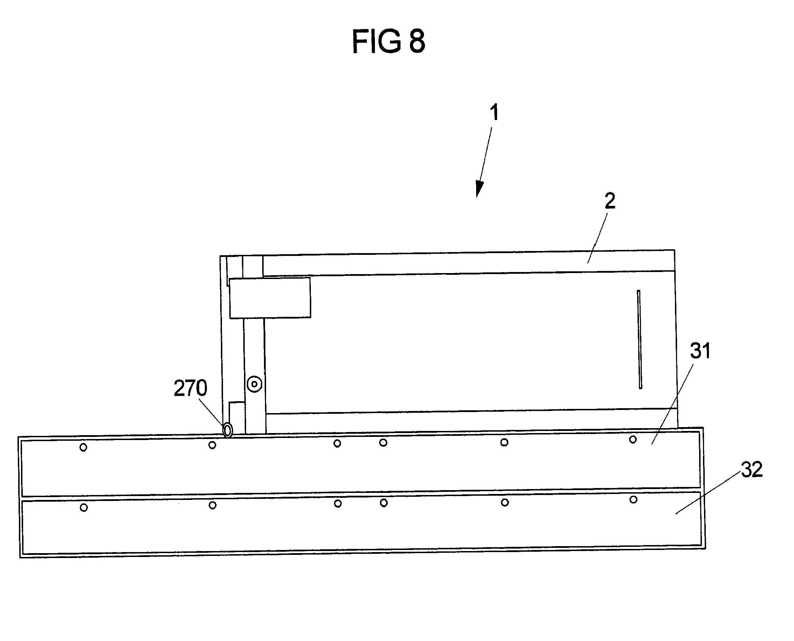

Figure 7 shows a measurement device 1 according to another embodiment of the invention in side view. More particularly, the mechanism 3 for moving the tank 2 of the measurement device is in transport position, i.e. the translation stages 31, 32 extend above one another and parallel to one another. Tank 2 is mounted to the upper translation stage 31 via a hinge 270 that allows the tank 2 to be tilted towards the translation stages 31, 32 in order to bring the measurement device 1 in a very compact transport position (Fig. 8).

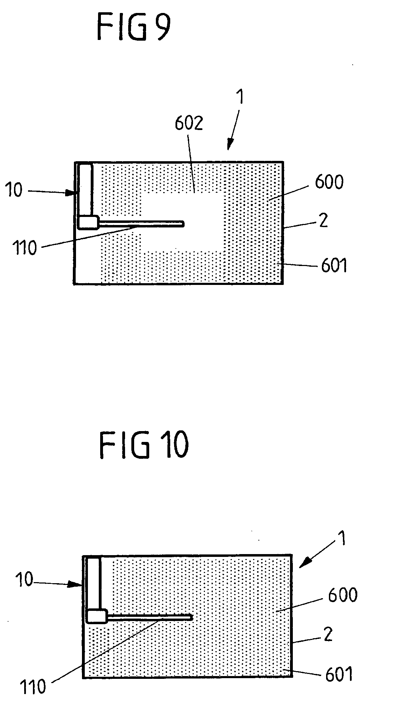

Figure 9 relates to another embodiment of the invention, wherein the tank 2 of the measurement device 1 is shown in top view. Tank 2 is equipped with a top cover 600 that is at least partially in contact with the upper surface of a liquid (e.g. water) in the tank 2.

The cover 600 has the purpose of avoiding waves of the liquid surface during the movement of the tank 2. The top cover 600 may be made of a thin (e.g. perforated with perforation openings 601) foil (e.g. a plastic foil) stretched out and e.g. mounted to a (e.g. plastic) frame. The perforation openings 601 of the cover 600 permit the discharge of air that may be present between the cover 600 and liquid surface.

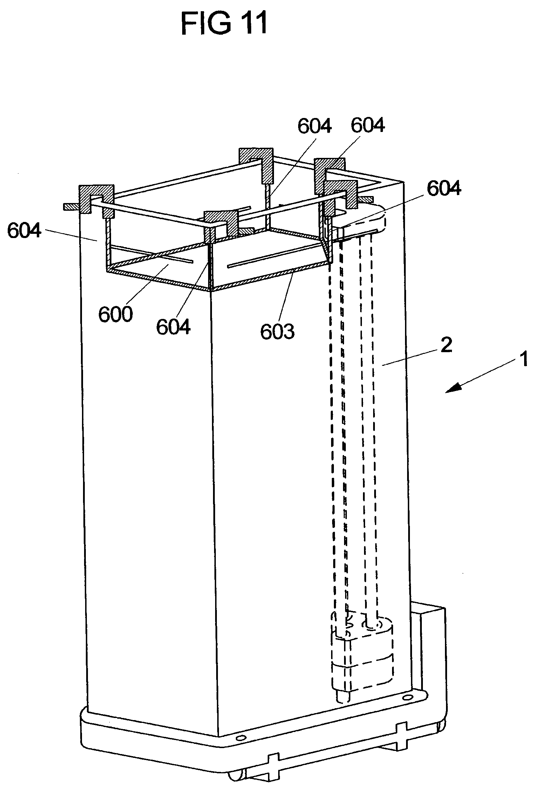

The measurement device 1 may further comprise a device for restricting a movement of the cover 600 away from the surface of the liquid in the form of a holder that fixes the cover 600 to tank 2. For example, the cover may be pressed onto the liquid surface by vertical holders which in turn are fixed to an upper edge of the tank 2 (see e.g. holders 604 of Fig. 11).

The cover 600 (e.g. the foil) can be of any shape, e.g. the cover may cover the liquid surface completely (e.g. except of a space around the z-direction translation stage 10); see Figure 10. The cover 600 may also cover a portion of the liquid surface only, e.g. in order to allow measurements using the detector 110 in proximity of the liquid surface (e.g. directly above the liquid surface). Thus, the cover 600 may comprise a recess 602 for at least a part of the detector 110 as shown in Figure 9.

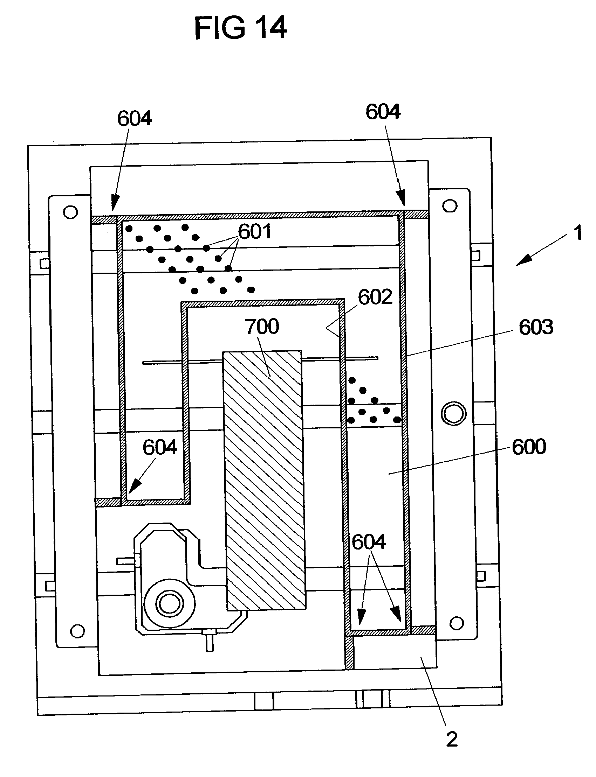

Figure 11 (perspective view), 12 (side view) and 13 (top view) illustrate a possible configuration of cover 600. The cover 600 is a foil attached to a frame 603. The frame 603, in turn, is connected to a plurality of holders 604. Each one of the holders 604 comprises a curved section 6041 (e.g. U-shaped) that is hooked to an upper edge of tank 2. The curved sections 6041 may be fixed to the tank 2 by fixing means such a screws. It is noted that the perforating openings 601 shown in Fig. 14 are only exemplarily. Of course, more perforating openings might be provided. It is also possible that no perforating openings are provided.

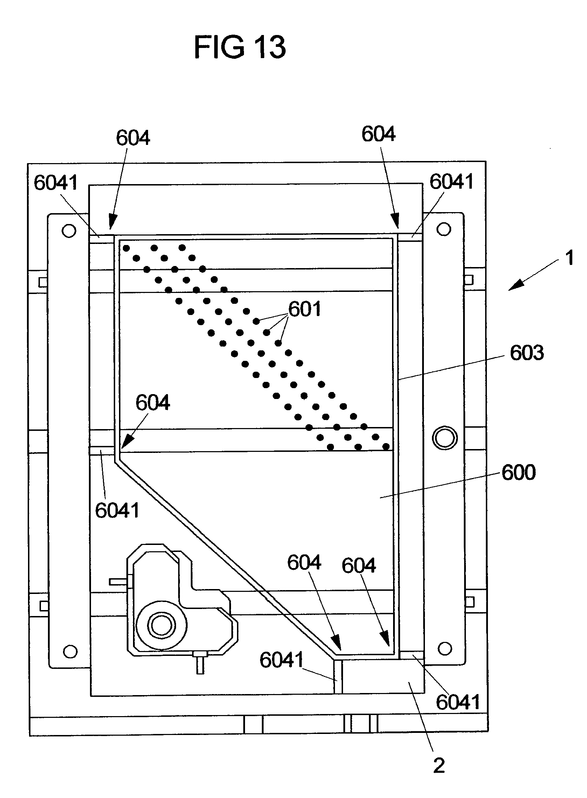

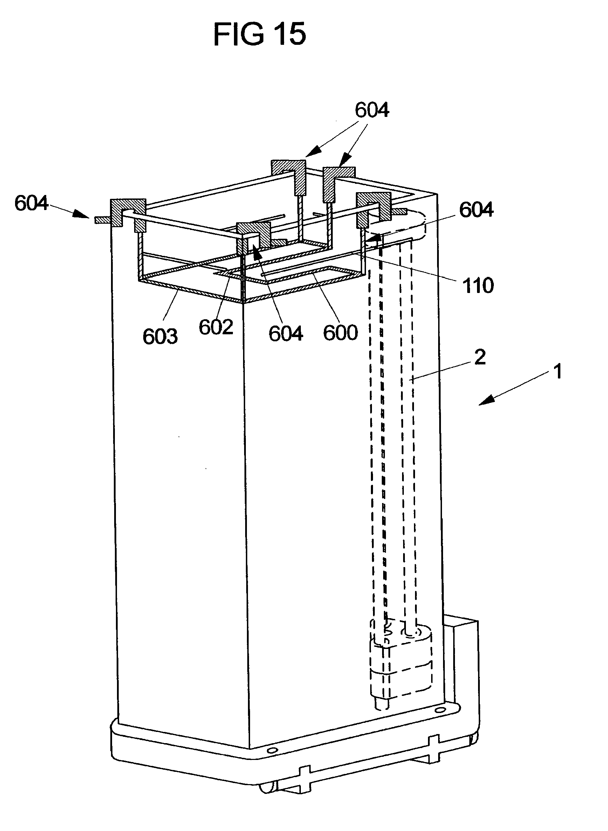

Figure 14 shows a modification of Figure 13, wherein the cover 600 comprises a recess 602 (similarly to Fig. 9). The recess 602 permits the detector (not shown in Fig. 14) to carry out measurements close to the liquid surface or even above the liquid surface (e.g. within a measurement area 700). It is again noted that the perforation (including the openings 601) could of course extend over the entire cover 600. Figure 15 shows the measurement device of Fig. 14 in perspective view.

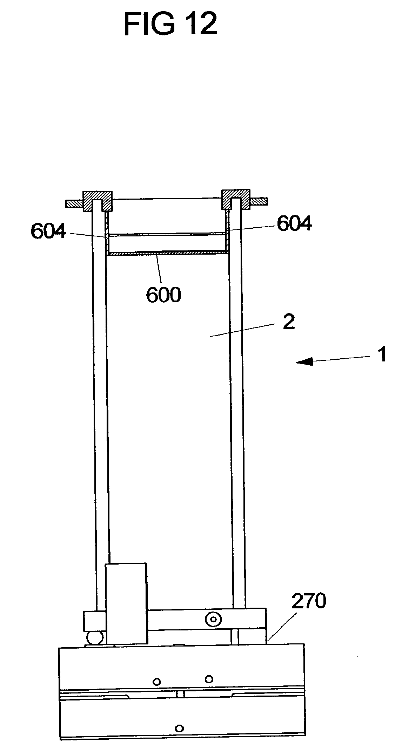

It is further noted that elements of the embodiments discussed above of course could also be used in combination. For example, the cover 600 of Fig. 9 to 15 could be used with the measurement devices of Fig. 1 to 8.

## Claims

1. A measurement device for measuring radiation of a radiation source, comprising
- a container (2) for receiving a liquid;
- at least one detector (110) arranged in the container (2); and
- a detector arrangement (200) for determining the size of a radiation field and/or the energy of radiation emitted by the radiation source (150).

2. The measurement device as claimed in claim 1, wherein the detector arrangement (200) is arranged outside the container (2).

3. The measurement device as claimed in claim 1 or 2, wherein the detector arrangement (200) comprises a plurality of detectors (210, 220) for detecting radiation of the radiation source (150), wherein at least some of the detectors (210, 220) are arranged in a row.

4. The measurement device as claimed in claim 2 or 3, wherein a plurality of first detectors (210) is arranged in a first row (DR1) and a plurality of second detectors (220) is arranged in a second row (DR2), the first row (DR1) extending at an angle relative to the second row (DR2).

5. The measurement device as claimed in any of the preceding claims, further comprising a mechanism (3) for moving the container (2) to various measurement locations along at least one positioning direction (x, y).

6. The measurement device as claimed in claims 3 and 5, wherein the support (230) is arranged on a side of the mechanism (3) that will face away from the radiation source (150).

7. The measurement device as claimed in claims 4 and 5, wherein the mechanism (3) is configured to move the container (2) along a first and a second positioning direction (x, y), wherein the first row (DR1) of the plurality of first detectors (210) is arranged parallel to a first positioning direction (x) and the second row (DR2) of the plurality of second detectors (220) is arranged parallel to a second positioning direction (y).

8. The measurement device as claimed in claim 7, wherein the plurality of first detectors (210) is arranged on a common support that extends parallel to the first positioning direction (x) and/or the plurality of second detectors (220) is arranged on a common support that extends parallel to the second positioning direction (y).

9. The measurement device as claimed in any of claims 2 to 8, wherein at least some of the detectors (210, 220) are mounted in such a way that they are pivotable around a common axis.

10. The measurement device as claimed in any of the preceding claims, wherein the detector arrangement (200) comprises a measurement chamber (250) that will be arranged between the radiation source (150) and the mechanism (3) for moving the container (2).

11. The measurement device as claimed in claim 10, wherein the measurement chamber (250) is configured for measuring the radiation dose or energy and/or the area of radiation.

12. A method for measuring radiation of a radiation source, in particular using a measurement device as claimed in any of the preceding claims, the method comprising the steps of:
- determining the size of a radiation field and/or the energy of radiation emitted by the radiation source (150) using a detector arrangement (200);
- carrying out a measurement of radiation doses using a detector (110) arranged in a liquid filled container (2).

13. A measurement device for measuring radiation of a radiation source, in particular as claimed in one of the preceding claims, comprising
- a container (2) filled with a liquid;
- a detector (110) for detecting radiation of the radiation source (150), the detector (110) being arranged in the container (2); and
- a cover (600) at least partially in contact with a surface of the liquid.

14. The measurement device as claimed in claim 13, further comprising a device (604) for restricting a movement of the cover (600) away from the surface of the liquid.

15. The measurement device as claimed in claim 13 or 14, wherein the cover (600) comprises at least one recess (602) for permitting measurements in the proximity of the surface of the liquid.
